# EUROPÄISCHE PATENTSCHRIFT

(11) **EP 2 377 972 B1**
(45) Veröffentlichungstag und Bekanntmachung des Hinweises auf die Patenterteilung: **05.03.2014**
(21) Anmeldenummer: 10004114.4
(22) Anmeldetag: 19.04.2010
(51) Int. Cl.: C25B 15/08, B01D 53/26, C01B 3/50, C01B 3/56

(54) **Gerät zur elektrischen Erzeugung von Wasserstoff**
Device for electric generation of hydrogen
Appareil de production électrique d'hydrogène

(43) Veröffentlichungstag der Anmeldung: 19.10.2011
(73) Patentinhaber: GP Joule Holding GmbH & Co. KG, 25821 Reußenköge (DE)
(72) Erfinder: Höller, Stefan, 23552 Lübeck (DE); Gädeke, Freimut, 23564 Lübeck (DE); Würfel, Claus, 23558 Lübeck (DE); Mantai, Nils, 23560 Lübeck (DE); Küter, Uwe, 23560 Lübeck (DE)
(74) Vertreter: Vollmann, Heiko

(56) Entgegenhaltungen:
- WO-A2-2008/141784
- JP-A- 8 085 892
- US-A1- 2009 263 693

## Beschreibung

### Beschreibung

Die Erfindung betrifft ein Gerät zur elektrischen Erzeugung von Wasserstoff aus Wasser.

Zur Erzeugung von Wasserstoff aus Wasser mittels elektrischer Energie zählt es zum Stand der Technik Elektrolyseure einzusetzen. Diese existieren in unterschiedlichen Bauformen. Gegenstand der vorliegenden Erfindung ist ein Gerät mit einem Elektrolyseur der PEM-Bauart (Polymer Elektrolyt Membrane), also ein Elektrolyseur, der mit einer protonendurchlässigen Polymermembran arbeitet, Derartige Elektrolyseure werden typischerweise in so genannten stacks, also in Stapeln gebaut, um auf möglichst kleinem Raum eine möglicht hohe Gasausbeute zu erzielen. Dabei wird jeder Membran zur einer Seite Wasser zugeführt, wobei durch die zu beiden Seiten der Membran angeordneten und mit der Elekrolysespannung versorgten Elektroden eine Aufspaltung in Wasserstoff und Sauerstoff erfolgen und der Wasserstoff zu einer Seite der Membran und der Sauerstoff auf der anderen Seite entsteht, auf welcher das Wasser zugeführt wird.

Um die Protonendurchgängigkeit der Polymerelektrolytmembran zu gewährleisten ist es erforderlich, diese stets feucht zu halten, was allerdings dazu führt, dass auch der erzeugte Wasserstoff typischerweise mit Wasserdampf und/oder Wasser in Tröpfchenform versehen ist. Bei vielen technischen Anwendungen ist diese im Wasserstoff mitgeführte Wasserfracht unerwünscht, weshalb sie zu entfernen ist. So ist beispielsweise bei der Speicherung des Wasserstoffs in den heute üblicherweise ver wendeten Metallhydridspeichem die mitgeführte Wasserfracht vor Einlagerung lagerung zu entfernen. Mechanische Wasserabscheider reichen hier in der Regel nicht aus, da sie nicht in der Lage sind, den Wasserstoffstrom ausreichend von Wasser zu befreien.

Es zählt daher zum Stand der Technik, zur Trocknung des Wasserstoffes dem Elektrolyseur ausgangsseitig eine Wasserabscheideeinrichtung nachzuschalten, die nach dem Prinzip der Druckwechseladsorption arbeitet. Dabei wird der aus dem Elektrolyseur austretende mit Wasser und Wasserdampf angereicherte Wasserstoffstrom über ein oder mehrere Molekularsiebbetten geführt, welche das Wasser binden. Ene solche Bindung erfolgt jedoch nur so lange, wie die Molekularsiebbetten nicht gesättigt sind. Es müssen daher die Molekularsiebbetten in regelmäßigen Abständen regeneriert werden. In der Praxis werden daher parallel zwei Molekularsiebbetten vorgesehen, die abwechselnd durchströmt werden, wobei das nicht aktive Bett regeneriert wird, indem es mit getrocknetem Wasserstoff im Gegenstrom gespült wird. Dieses Verfahren ist vergleichsweise aufwendig und verschlechtert insbesondere den Wirkungsgrad des Gerätes, da der zum Rückspülen verwendete Wasserstoff üblicherweise nutzlos entweicht. Das Verfahren stößt insbesondere mit zunehmender Wasserfracht im Wasserstoffstrom an seine Grenzen, weshalb diese aus dem Stand der Technik bekannten Geräte recht ineffektiv sind.

US 2009/263693 A1 offenbart eine Apparatur zur elektrolytischen Erzeugung von Wasserstoff aus einem Elektrolyten. Die Apparatur weist eine Abscheidevorrichtung in Form von Kondensationspfatten auf, welche den Wasserstoff von der elektrolytischen Flüssigkeit trennen soll. Für die Erzeugung von Wasserstoff aus Wasser ist diese Apparatur nicht vorgesehen und nur bedingt geeignet.

JP 8085892 A offenbart ein Gerät zur elektrischen Erzeugung von Wasserstoff und Sauerstoff aus Wasser, welches einen Elektrolyseur der PEM-Bauart aufweist. Dieses Gerät weist Wasserabscheidevorrichtungen auf, welche mit den Ausgängen des Elektrolyseurs leitungsverbunden sind. Die Wasserabscheidevorrichtungen bestehen jeweils aus einem Vorabscheider zum Trennen von gasförmigen und flüssigen Anteilen sowie einer thermischen Abscheidestufe, die mit Peltier-Elementen arbeitet.

Bei diesem Stand der Technik ist nachteilig, dass eine gewisse Menge an Restfeuchtigkeit im erzeugten Wasserstoff verbleibt, also der erzeugte Wasserstoff nicht rein ist.

Vor diesem Hintergrund liegt der Erfindung die Aufgabe zugrunde ein gattungsgemäßes Gerät-zur elektrischen Erzeugung von Wasserstoff aus Wasser so aufzubauen, dass es mit einem möglichst hohen Wirkungsgrad zur Erzeugung von getrocknetem, d. h. von einem Großteil des Wassers befreiten Wasserstoff arbeitet.

Diese Aufgabe wird gemäß der Erfindung durch die in Anspruch 1 angegebenen Merkmale gelöst. Vorteilhafte Ausgestaltungen der Erfindung ergeben sich aus den Unteransprüchen sowie der nachfolgenden Beschreibung.

Das erfindungsgemäße Gerät zur elektrischen Erzeugung von Wasserstoff aus Wasser weist einen Elektrolyseur der PEM-Bauart, also einen solchen, der mit einer protonendurchlässigen Polymermembran arbeitet, auf. Dieser Elektrolyseur ist mit einem Eingang zum Zuführen von Wasser und einem ersten Ausgang für den mit Wasser und/oder Wasserdampf angereicherten und im Elektrolyseur erzeugten Wasserstoff sowie mit einem zweiten Ausgang für Sauerstoff und Wasser ausgestattet. Das Gerät weist darüber hinaus eine Wasserabscheideeinrichtung auf, deren Eingang mit dem ersten Ausgang des Elektrolyseurs leitungsverbunden ist und deren gasführender Ausgang zu einem Wasserstoffentnahmeanschluss im oder am Gerät führt, wobei die Wasserabscheideeinrichtung eine thermische Abscheidestufe aufweist.

Grundgedanke der vorliegenden Erfindung ist es somit innerhalb des Gerätes einen Elektrolyseurs mit Wasserabscheideeinrichtung vorzusehen, wobei die Wasserabscheideeinrichtung eine thermische Abscheidestufe aufweist. Es versteht sich, dass grundsätzlich als Teil der Abscheideeinrichtung oder dieser vorgeschaltet eine mechanische Abscheideeinrichtung als Vorabschneider vorgesehen ist, beispielsweise ein Zyklonabscheider oder ein Schwerkraftabscheider. Eine solche Abscheideeinrichtung ist keine Abscheidestufe im Sinne der vorliegende Erfindung. Die Wasserabscheideeinrichtung ist erfindungsgemäß zweioder mehrstufig aufgebaut, wobei es sich bei der ersten Stufe um eine thermische Abscheidestufe handelt, bei welcher dem Wasserstoffstrom durch Kühlung Wasser entzogen wird.

Unter Wasserstoffentnahmeanschluss im Sinne der Erfindung ist nicht nur ein Anschluss im eigentlichen Sinne sondern auch eine Leitung innerhalb oder außerhalb des Gerätes zu verstehen, die den trockenen Wasserstoff zu einem Verbraucher oder einem Speicher leitet. So kann von einen solchen Wasserstoffentnahmeanschluss in dem Gerät über eine Leitung ein ebenfalls in dem Gerät vorgesehener Metallhydridspeicher beaufschlagt werden.

Die erfindungsgemäße Lösung ist besonders vorteilhaft, da der Elektrolyseur mit vergleichsweise hoher Temperatur und damit hohem Wirkungsgrad betrieben werden kann.

Da für einen effektiven Betrieb des Elektrolyseurs die Temperatur möglichst hoch sein sollte, andererseits jedoch die Protonenaustauschmembran stets feucht gehalten werden muss, ergeben sich vom Wirkungsgrad her günstige Betriebsbedingungen, wenn der Elektrolyseur in Bereichen von 70°C bis 80°C oder mehr betrieben wird. Nach oben hin ist die Betriebstemperatur durch den Siedepunkt des Wassers begrenzt, der keinesfalls erreicht werden darf. Allerdings, verdoppelt sich die vom Wasserstoff mitgeführte Wasserfracht etwa alle 11°C. Wird also die Betriebstemperatur von 60°C auf 70°C erhöht, so ergibt sich nahezu die doppelte Menge des abzuführenden Wassers. Eine solche Menge von Wasser abzuscheiden ist mit der erfindungsgemäßen Lösung, nämlich mit einer thermischen Abscheidestufe, unproblematisch, insbesondere völlig wasserstoffveflustfrei. Der Elektrolyseur des erfindungsgemäßen Gerätes kann somit wesentlich effektiver, da mit höherer Temperatur, betrieben werden. Die zur Kühlung aufzuwendende Energie ist demgegenüber deutlich geringer.

Erfindungsgemäß erfolgt die Wasserabscheidung in zwei Stufen, es können jedoch auch mehr Stufen vorgesehen sein. Die zweite Abscheidestufe ist erfindungsgemäß durch eine Druckwechseladsorptionseinrichtung gebildet. Als zweite Stufe kommt eine Druckwechseladsorption in Frage, da hier dem Wasserstoff nur noch wenig Wasser zu entziehen ist, es jedoch auf einen möglichst vollständigen Wasserentzug ankommt. Da der Wasserstoff mit nur noch geringen Mengen Wasser befrachtet ist, können die Molekularsiebbetten vergleichsweise lange genutzt werden, bevor eine Rückspülung erforderlich ist.

Erfindungsgemäß ist zwischen Elektrolyseur und der thermischen Abscheidestufe ein mechanischer Vorabscheider angeordnet, zum Beispiel ein Schwerkraftwasserabscheider oder ein Zyklonwasserabscheider. In einem solchen vorabscheider kann ein Teil der mitgeführten Wasserfracht nahezu verlustfrei abgeschieden werden. Dabei ist es besonders vorteilhaft, den Vorabscheider so leitungsmäßig einzugliedern, dass er gleichzeitig zur Aufnahme des aus den Abscheidestufen rückgeführten Wassers dienen kann. Hierzu ist der Vorabscheider zweckmößigerweise sowohl eingang- als auch ausgangsseitig seiner gasführenden Leitungen mittels Ventilen absperrbar und über eine Bypassleitung, die ebenfalls mittels eines Ventils absperrbar ist überbrückbar. Wenn dann die Rückführleitungen der Abscheidestufen, die ebenfalls über Ventile absperrbar sind, in den Vorabscheider münden, kann durch Absperren der gasführenden Leitungen des Vorabscheiders und Öffnen der Bypassleitung, beim Öffnen der Ventile in den Rückführleitungen das rückzuführende Wasser über den ohnehin vorhandenen Druck in der Wasserstoffleitung in den Vorabscheider gedrückt werden. Dabei ist es unproblematisch, wenn Gas in Form von Wasserstoff durch die Rückführleitungen in den Vorabscheider gelangt, da dieses später wieder den Abscheidestufen zugeführt werden kann.

Vorteilhaft wird gemäß einer Weiterbildung der Erfindung ein wasserführender Ausgang zumindest der thermischen Abscheidestufe mit dem Eingang des Elektrolyseurs zum Rückführen des Wassers leitungsverbunden. Die Leitungsverbindung erfolgt zumindest zeitweise, d. h. in der Leitung sind entsprechende Ventile vorgesehen, die bedarfsweise entsprechend angesteuert werden, um das in der thermischen Abscheidestufe gesammelte Wasser dem Eingang des Elektrolyseurs rückzuführen. Zum Transport dieses Wassers kann der Systemleitungsdruck innerhalb des Gerätes dienen, d. h. der Wasserstoffdruck. Es ist hierfür zweckmäßigerweise eine Bypassleitung mit Ventil vorzusehen und zwar zwischen dem ersten Ausgang des Elektrolyseurs, also dem wasserstoffführenden Ausgang und dem zu entleerenden Abscheider unter Überbrückung des oder der dazwischenliegenden Abscheider.

Unter Eingang des Elektrolyseurs im Sinne der vorliegenden Erfindung ist jede dorthinführende wasserführende Leitung zu verstehen, die beispielsweise aus einem Reservoir innerhalb oder außerhalb des Gerätes gespeist wird. Dieses Wasser kann also entweder in diese Leitung oder vorteilhaft in das Reservoir rückgeführt werden.

Der Vorabscheider weist ebenfalls eine mittels eines Ventils absperrbare Rückführleitung auf, über die das im Vorabscheider gesammelte Wassser dem Eingang des Elektrolyseurs bzw. dem vorgeschalteten Wassertank zugeführt werden kann. Durch Einsatz eines Schwimmerventils am Boden des Vorabscheiders kann die Rückführung des Wassers quasi selbsttätig erfolgen, sofern das Absperrventil in der zum Wassertank führenden Rückführleitung geöffnet ist:

Die thermische Abscheidestufe ist vorteilhaft mit einer elektrisch befriebenen Kühleinrichtung versehen. Derartige Kühleinrichtungen sind vergleichsweise kostengünstig effizient und kleinbauend verfügbar. Bei größeren Geräten wird eine Kompressorkühlvorrichtung vorteilhaft eingesetzt werden. Alternativ, insbesondere bei kleineren Geräten kann auch eine Absorberkühlvorrichtung oder eine mit Peltier-Elementen arbeitenden Kühlvorrichtung eingesetzt werden. Besonders vorteilhaft ist es, wenn die thermisch arbeitende Abscheidestufe so ausgelegt ist, dass der aus dem Elektrolyseur kommende und mit Wasser und/oder Wasserdampf angereicherte Wasserstoff auf eine Temperatur kurz überhalb des Gefrierpunkts heruntergekühlt wird, also vorzugsweise zwischen 0°C und 5°C. In diesem Temperaturbereich kondensiert ein Großteil des im Wasserstoffstrom mitgeführten Wassers. Die verbleibende Wasserfracht im Wasserstoff ist vergleichsweise gering. Da eine Kühlung oberhalb des Gefrierpunktes erfolgt, sind hinsichtlich der Abfuhr des kondensierten Wassers keine besonderen Vorkehrungen im Hinblick auf eine Eisbildung zu treffen.

Besonders effektiv arbeitet das erfindungsgemäße Gerät, wenn Elektrolyseur, Wasserabscheideeinrichtung sowie etwaige Nebenaggregate, Verbindungsleitungen, Ventile und dergleichen, so ausgelegt sind, dass der Wasserstoff mit einem Druck von 20 bar oder mehr, vorzugsweise etwa 30 bar, erzeugt und gehalten wird. Der Betrieb des Geräts mit diesem Druck ist besonders vorteilhaft, da dann für die Speicherung des Wasserstoffs in Metallhydridspeichern keine gesonderte Druckerhöhungsanlage erforderlich ist. Das Gerät gibt den trockenen Wasserstoff mit dem erforderlichen Druck ab.

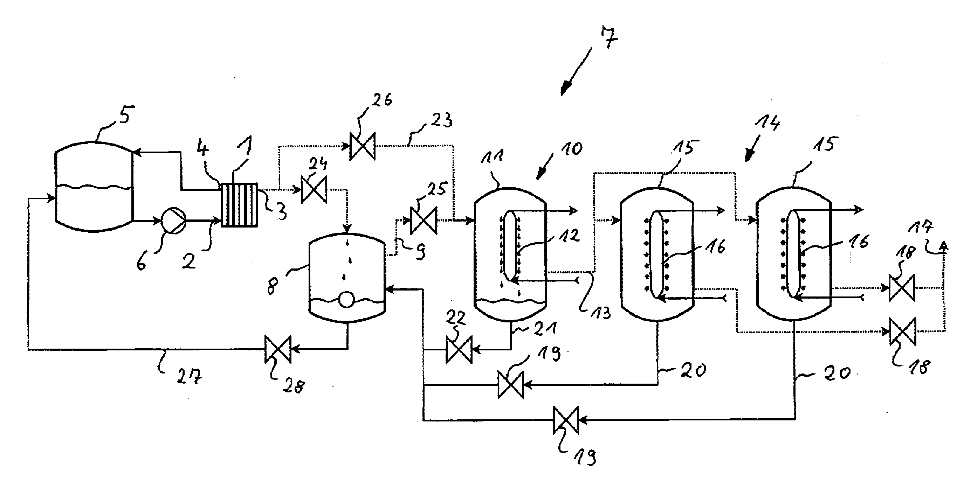

Ein Gerät ähnlich der Erfindung ist nachfolgend anhand der Zeichnung näher erläutert. Die einzige Figur zeigt ein Schaubild einer Ausführungs-Variante ähnlich dem erfindungsgemäßen Gerät.

Das in der Figur dargestellte Gerät ist in einem nicht dargestellten, im wesentlichen geschlossenen Gehäuse angeordnet, muss jedoch nicht notwendigerweise so aufgebaut sein, sondern kann insbesondere bei Integration in eine Anlage auch in seinen Komponenten in die Anlage eingegliedert sein.

Das Gerät weist einen Elektrolyseur 1 der PEM-Bauart auf, der in üblicher Weise als stack aufgebaut ist, jedoch grundsätzlich auch in jeder anderen geeigneten Form aufgebaut sein kann. Der Elektrolyseur weist einen Eingang 2 zum Zuführen von Wasser auf. Ein erster Ausgang 3 des Elektrolyseurs 1 ist zur Abfuhr des im Elektrolyseur 1 erzeugten Wasserstoffs vorgesehen, der typischerweise mit Wasser und Wasserdampf befrachtet ist. Weiterhin weist der Elektrolyseur 1 einen zweiten Ausgang 4 auf, der zur Abfuhr des im Elektrolyseur 1 entstehen Sauerstoffs vorgesehen ist.

Bei der dargestellten Ausführungsform weist das Gerät einen Vorratsbehälter 5 in Form eines Wassertanks auf, der über eine Pumpe 6 mit dem Eingang 2 des Elektrolyseurs wasserleitungsverbunden ist. Der zweite Ausgang 4 mündet über eine Leitung im oberen Bereich des Wasser-tanks 5, Der erste Ausgang 3, also der wasserstoffführende Ausgang 3, des Elektrolyseurs 1 ist mit einer Wasserabscheldeeinrichtung 7 leitungsverbunden,

Die Wasserabscheideeinrichtung 7 weist einen Schwerkraftwasserabscheider 8 auf, dessen gasführende Leitung 9 mit einer ersten thermischen Wasserabscheidestufe 10 leitungsverbunden ist. In dieser ersten thermischen Abscheidestufe 10, die aus einem geschlossenen Behälter 11 mit darin eingegliederter Kühlmittelleitung 12 gebildet ist, wird der aus dem Schwerkraftwasserabscheider 8 kommende mit Wasser befrachtete Wasserstoffstrom auf eine Temperatur von etwa 4°C heruntergekühlt. Die Kühlmittelleitung 12 ist im Bereich des Behälters 11 als Verdampfer ausgebildet. Außerhalb des Behälters ist ein Kondensator vorgesehen. Diese Bauteile sind in an sich bekannter Weise über eine Drosselstelle und eine Kompressor zu einem Kühlkreislauf verbunden. Das am Verdampfer 12 kondensierende Wasser sammelt sich am Boden des Behälters 11,

Das aus der ersten thermischen Abscheidestufe 10 austretende Gas gelangt über eine Leitung 13 in eine zweite thermische Abscheidestufe 14, die aus zwei Behältern 15 mit darin angeordneten Kühlmittelleitungen 16 als Verdampfer vorgesehen sind, Die Kühlmittelleitungen 16 sind in gleicher Weise ausgebildet, wie bei der ersten thermischen Abscheidestufe 10 beschrieben, mit einem Kondensator verbunden. Die Kühlkreisläufe weisen jeweils einen Kompressor und einen Kondensator für alle Verdampfer zusammen und eine Drosselstelle auf und sind zum abwechselnden Betrieb vorgesehen. Die Abschaltestufen 10 und 14 können vorteilhaft über einen gemeinsamen Kühlkreislauf gespeist werden, sodass nur ein Kompressor erforderlich ist, wobei die unterschiedlichen Temperaturen jeweils über die zugeordneten Drosselstellen eingestellt werden.

In dieser zweiten thermischen Abscheidestufe 14 wird der Wasserstoff mit dem darin noch mitgeführten Restwasser auf -36°C heruntergekühlt. Dabei resublimiert, bzw, erstarrt das verbleibende Restwasser am Verdampfer 16. Der aus der zweiten thermischen Abscheidestufe 14 austretende Wasserstoff steht am Wasserstoffentnahmeanschluss 17 und ist trocken, also praktisch wasserfrei. Die Behälter 15 können über ausgangsseitige Ventile 18 wechselweise betrieben werden, d. h. einer der Behälter dient zur Kühlung während der andere Behälter abgetaut wird und das sich am Behälterboden sammelnde Wasser über eine Leitung 20, die ebenfalls mittels eines Ventils 19 absperrbar ist, in den Schwerkraftwasserabscheider 8 geführt wird. Das Ventil 19 in einer Rückführleitung 20 wird jeweils nur kurzzeitig geöffnet, wobei das zum Behälter 15 ausgangsseitig zugehörige Ventil 18 sperrend angesteuert wird bis das abgetaute Wasser aus dem Behälter 15 in den Schwerkraftwasserabscheider 8 überführt ist.

Eine entsprechende Einrichtung ist für den Behälter 11 vorgesehen, über die dort bodenseitig anschließende Leitung 21 und das nachgeschaltete Absperrventil 22 kann dort das Wasser vom Behälter 11 in den Schwerkraftwasserabscheider 8 überführt werden. Hierzu ist der Schwerkraftwasserabscheider 8 über eine Bypassleitung 23 zu überbrücken, mittels der Ventile 24 und 25 abzusperren, sodass nach Öffnen eines Ventils 26 in der Bypassleitung 23 der Behälter 11 druckbeaufschlagt ist und das am Boden befindliche Wasser über die Leitung 21 in den Schwerkraftwasserabscheider 8 gedrückt wird. Alternativ kann diese Rückführleitung auch direkt in den Wassertank 5 münden.

Im vorliegenden Ausführungsbeispiel schließt am Boden des Schwerkraftwasserabscheiders 8 eine Wasserrückführleitung 27 an, die über ein Ventil 28 mit dem Wassertank 5 verbindbar ist. Das in der Wasserabscheideeinrichtung 7 abgeschiedene Wasser wird also vollständig in den Wassertank 5 rückgeführt. Die Vorrichtung wird typischerweise so betrieben, dass ausgangsseitig des Elektrolyseurs der Wasserstoff mit einem Druck von 20 - 30 bar ansteht. Der Elektrolyseur wird dabei bei einer Temperatur zwischen 70 - 80°C betrieben.

### Bezugszeichenllste

- 1: - Elektrolyseur
- 2: - Eingang von 1
- 3: - erster Ausgang von 1
- 4: - zweiter Ausgang von 1
- 5: - Wassertank
- 6: - Pumpe
- 7: - Wasserabscheideeinrichtung
- 8: - Schwerkraftwasserabscheider
- 9: - gasführende Leitung
- 10: - erste thermische Abscheidestufe
- 11: - Behälter von 10
- 12: - Kühlmittelleitung, Verdampfer von 10
- 13: - Leitung
- 14: - zweite thermische Abscheidestufe
- 15: - Behälter von 14
- 16: - Kühlmittelleitung, Verdampfer von 14
- 17: - Wasserstoffentnahmeanschluss
- 18: - Ventile am Ausgang
- 19: - Ventile in der Leitung
- 20: - Rückführleitung von 16
- 21: - Rückführleitung von 11
- 22: - Ventil in 21
- 23: - Bypassleitung
- 24: - Ventil
- 25: - Ventil
- 26: - Ventil in der Bypassleitung
- 27: - Wasserrückführleitung
- 28: - Ventil in der Wasserrückführleitung

## Patentansprüche

1. Gerät zur elektrischen Erzeugung von Wasserstoff aus Wasser, mit einem Elektrolyseur (1) der PEM-Bauart, der einen Eingang (2) zum Zuführen von Wasser und einen ersten Ausgang (9) für den mit Wasser und/oder Wasserdampf angereicherten und im Elektrolyseurs (1) erzeugten Wasserstoff sowie einen zweiten Ausgang (4) für Sauerstoff und Wasser aufweist, und mit einer Wasserabscheideeinrichtung (7), deren Eingang mit dem ersten Ausgang (3) des Elektrolyseurs (1) leitungsverbunden ist und deren gasführender Ausgang zu einem Wasserstoffentnahmeanschluß (17) im oder am Gerät führt, wobei die Wasserabscheideeinrichtung (7) mindestens eine thermische Abscheidestufe (10) aufweist, wobei zwischen dem ersten Ausgang (3) des Elektrolyseurs (1) und dem Eingang der thermischen Abscheidestufe (10) ein mechanischer Vorabscheider (8) geschaltet ist, **dadurch gekennzeichnet, dass** der thermischen Abscheidestufe (10) eine weitere Abscheidestufe (14) nachgeschaltet ist, die eine Druckwechseladsorptionseinrichtung aufweist.

2. Gerät nach Anspruch 1, bei dem das in der thermischen Abscheidestufe (10) abgeschiedene Wasser über eine Rückführleitung (21) dem Vorabscheider (8) zugeführt ist.

3. Gerät nach Anspruch 2, bei dem die Rückführleitung (21) mit einem Absperrventil (22) versehen ist, eine den Vorabscheider (8) überbrückende Bypassleitung (23) vorgesehen ist, die mittels eines Ventils (26) absperrbar ist und bei dem die gasführenden Ein- und Ausgangsleitungen des Vorabscheiders (8) mittels Ventilen (24, 25) absperrbar sind.

4. Gerät nach einem der vorhergehenden Ansprüche, bei dem der Vorabscheider (8) über eine mittels eines Ventils, (28) absperrbare Rückführlieitung (27) mit dem Eingang (2) zum Zuführen von Wasser leitungsverbunden ist.

5. Gerät nach einem der vorhergehenden Ansprüche, bei dem die Wasserabscheideeinrichtung (7) einen wasserführenden Ausgang (21) zumindest der thermischen Abscheidestufe (10) aufweist, der mit dem Eingang (2) des Elektrolyseurs (1) zum Rückführen des Wassers zumindest zeitweise leitungsverbunden ist.

6. Gerät nach einem der vorhergehenden Ansprüche, bei dem die thermische Abscheidestufe (10) eine elektrisch betriebene Kühleinrichtung aufweist.

7. Gerät nach Anspruch 6, bei dem die Fühleinrichtung eine Abscorberkühlvorrichtung, eine Kompressorkühlvorrichtung (16) oder eine mit Peltierelementen arbeitende Kühlvorrichtung aufweist.

8. Gerät nach einem der vorhergehenden Ansprüche, bei dem die thermische Abscheidestufe (10) so ausgelegt ist, dass der aus dem Elektrolyseur (1) kommende und mit Wasser und/oder Wasserdampf angereicherte Wasserstoff auf eine Temperatur unter 5°C und über dem Gefrierpunkt gekühlt wird.

9. Gerät nach einem der vorhergehenden Ansprüche, das so ausgelegt ist, dass der Wasserstoff mit einem Druck von 20 oder mehr bar erzeugt und gehalten wird.

10. Gerät nach Anspruch 9, das so ausgelegt ist, dass der Wasserstoff mit einem Druck über 30 bar erzeugt und gehalten wird.

## Claims

1. An apparatus for the electrical production of hydrogen from water, with an electrolyser (1) of the PEM construction type which comprises an entry (2) for feeding water and a first exit (9) for the hydrogen enriched with water and/or water vapour and produced in the electrolyser (1), as well as a second exit (4) for oxygen and water, and with a water separation device (7) whose entry is conductively connected to the first exit (3) of the electrolyser (1) and whose gas-leading exit leads to a hydrogen removal connection (17) in or on the apparatus, wherein the water separation device (7) comprises at least one thermal separation stage (10), wherein a mechanical pre-separator (8) is connected between the first exit (3) of the electrolyser (1) and the entry of the thermal separation stage (10), **characterised in that** a further separation stage (14) is arranged downstream of the thermal separation stage (10) and comprises a pressure swing adsorption device.

2. An apparatus according to claim 1, with which the water separated in the thermal separation stage (10) is led via a return conduit (21) to the pre-separator (8).

3. An apparatus according to claims 2, with which the return conduit (21) is provided with a shut-off valve (22), and a bypass conduit (23) bridging the pre-separator (8) is provided and can be shut off by way of a valve (26), and with which the gas-leading entry and exit conduits of the pre-separator (8) can be shut off by way of valves (24, 25).

4. An apparatus according to one of the preceding claims, with which the pre-separator (8) is conductively connected via a return conduit (27) able to be shut off by way of a valve (28), to the entry (2) for feeding water.

5. An apparatus according to one of the preceding claims, with which the water separation device (7) comprises a water-leading exit (21) at least of the thermal separation stage (10), and this exit at least temporarily is conductively connected to the entry (2) of the electrolyser (1) for leading back the water.

6. An apparatus according to one of the preceding claims, with which the thermal separation stage (10) comprises an electrically operated cooling device.

7. An apparatus according to claim 6, with which the cooling device comprises an absorber cooling device, a compressor cooling device (16) or a cooling device operating with Peltier elements.

8. An apparatus according to one of the preceding claims, with which the thermal separation stage (10) is designed such that the hydrogen coming from the electrolyser (1) and enriched with water and/or water vapour is cooled to a temperature below 5°C and above the freezing point.

9. An apparatus according to one of the preceding claims, which is designed such that the hydrogen is produced and held, at a pressure of 20 or more bar.

10. An apparatus according to claim 9, which is designed such that the hydrogen is produced and held, at a pressure of more than 30 bar.

## Revendications

1. Appareil pour la production électrique d'hydrogène à partir d'eau, comportant un électrolyseur (1) du type PEM, qui possède une entrée (2) pour amener de l'eau et une première sortie (9) pour l'hydrogène enrichi en eau et/ou en vapeur d'eau et produit dans l'électrolyseur (1), ainsi qu'une deuxième sortie (4) pour l'oxygène et l'eau, et comportant un dispositif (7) séparateur d'eau, dont l'entrée est reliée par une conduite à la première sortie (3) de l'électrolyseur (1), et dont la sortie, par laquelle passe un gaz, conduit à une prise (17) de prélèvement d'oxygène dans ou sur l'appareil, le dispositif (7) séparateur d'eau comprenant au moins un étage séparateur thermique (10), un pré-séparateur mécanique (8) étant monté entre la première sortie (3) de l'électrolyseur (1) et l'entrée de l'étage séparateur thermique (10), **caractérisé en ce qu'**en aval de l'étage séparateur thermique (10) est monté un étage séparateur supplémentaire (14), qui comprend un dispositif d'adsorption à modulation de pression.

2. Appareil selon la revendication 1, dans lequel l'eau séparée dans l'étage séparateur thermique (10) est envoyée par une conduite de retour (21) au pré-séparateur (8).

3. Appareil selon la revendication 2, dans lequel la conduite de retour (21) est pourvue d'une vanne d'arrêt (22), une conduite de bipasse (23), évitant le pré-séparateur (8), étant prévue, qui peut être sectionnée à l'aide d'une vanne (26), et dans lequel les conduites d'entrée et de sortie du pré-séparateur (8) assurant le passage du gaz pouvant être sectionnées à l'aide de vannes (24, 25).

4. Appareil selon l'une des revendications précédentes, dans lequel le pré-séparateur (8) est relié par une conduite, par l'intermédiaire d'une conduite de retour (27) pouvant être sectionnée à l'aide d'une vanne (28), à l'entrée (2) pour permettre l'amenée d'eau.

5. Appareil selon l'une des revendications précédentes, dans lequel le dispositif (7) séparateur d'eau comprend une sortie (21), assurant le passage de l'eau, au moins de l'étage séparateur thermique (10), qui est au moins de temps à autre relié par une conduite à l'entrée (2) de l'électrolyseur (1) pour permettre le retour de l'eau.

6. Appareil selon l'une des revendications précédentes, dans lequel l'étage séparateur thermique (10) comprend un dispositif de refroidissement à fonctionnement électrique.

7. Appareil selon la revendication 6, dans lequel le dispositif de refroidissement comprend un dispositif de refroidissement par absorbeur, un dispositif de refroidissement (16) par compresseur ou un dispositif de refroidissement fonctionnant avec des éléments Peltier.

8. Appareil selon l'une des revendications précédentes, dans lequel l'étage séparateur thermique (10) est configuré de telle sorte que l'hydrogène sortant de l'électrolyseur (1) et enrichi en eau et/ou en vapeur d'eau soit refroidi à une température inférieure à 5°C et supérieure au point de congélation.

9. Appareil selon l'une des revendications précédentes, qui est configuré de façon à produire et à maintenir l'hydrogène sous une pression de 20 bar ou plus.

10. Appareil selon la revendication 9, qui est configuré de façon à produire et à maintenir l'hydrogène sous une pression supérieure à 30 bar.
